# EUROPEAN PATENT APPLICATION

(11) **EP 1 504 677 A1**
(43) Date of publication of application: **09.02.2005**
(21) Application number: 03700542.8
(22) Date of filing: 10.01.2003
(51) Int. Cl.: A23L 1/22, A23D 9/00

(54) **BODY TASTE IMPROVER COMPRISING LONG-CHAIN HIGHLY UNSATURATED FATTY ACID AND/OR ESTER THEREOF AND VEGETABLE FAT COMPOSITION CONTAINING THE SAME**

(30) Priority: 14.05.2002 JP 2002138961
(71) Applicant: J-Oil Mills, Inc., Tokyo 104-0044 (JP)
(72) Inventor: YAMAGUCHI, S., c/o J-Oil Mills, Inc, Yokohama-shi, Kanagawa 230-0053 (JP); TASHIMA, Ikukazu c/o J-Oil Mills, Inc., Yokohama-shi, Kanagawa 230-0053 (JP); MATSUZAKI, Narihide, c/o J-Oil Mills, Inc., Yokohama-shi, Kanagawa 230-0053 (JP)
(74) Representative: Woods, Geoffrey Corlett
(86) International application number: PCT/JP2003/000182
(87) International publication number: WO 2003/094633

(57) **Abstract**

The purpose of the present invention is to provide fat and oil being free of cholesterol and having a low content of saturated fatty acid, while having body taste.

Thus, the present invention is related to a body taste improver comprising a long-chain highly unsaturated fatty acid and/or an ester thereof, especially one for vegetable fat and oil, and to a vegetable fat and oil composition comprising the body taste improver.

## Description

### Technical Field

The present invention relates to a body taste improver comprising a long-chain highly unsaturated fatty acid and/or an ester thereof, and to vegetable fat and oil composition comprising thereof.

### Background of the invention

Arachidonic acid (cis-5,8,11,14-eicosatetraenoic acid) belongs to long-chain highly unsaturated (polyunsaturated) fatty acids, and exists in a phospholipid derived from animal organs or tissues. This fatty acid is an essential one, and is very important as a precursor for the synthesis of prostaglandin, thromboxane, leukotriene, etc

Attempts have been made to add the long-chain highly unsaturated fatty acids such as arachidonic acid and esters thereof for enrichment of nutrition and provision of various physiological functions in view of the above remarkable functions of arachidonic acid.

An enriched composition described in Japanese Patent Application laid open Hei 10 (1998)-99048 comprises arachidonic acid in an amount of 0.1∼10 % by weight as one of the components added for realizing a composition similar to that of mother's milk.

As an example of the above ester, Japanese Patent Application laid open Hei 4 (1992)-197134 discloses fat and oil composition for frying, which is protected against a decrease in temperature of an inner material due to evaporation latent heat. The composition comprises as constituting fatty acid unsaturated fatty acids such as arachidonic acid in an amount of 20~60 % by weight.

Japanese Patent Application laid open Hei 9 (1997)-13075 discloses fat and oil consisting of glyceride comprising ong-chain highly unsaturated fatty acids such as arachidonic acid, and having a function of reducing the concentration of fatty and oil in blood. The glyceride is obtained by transesterification. It has a different structure from natural one, in which less than 40 mol % of the total long-chain highly unsaturated fatty acids are bound to 2 position of the glyceride.

Japanese Patent Application laid open Hei 9 (1997) -13076 discloses fat and oil with the same composition as the above one, having a function of inhibiting platelet aggregation.

Japanese Patent Application laid open Hei 11 (1999)-89513 discloses a synthetic fat and oil composition similar to human milk fat and oil, in which n -6 long-chain highly unsaturated fatty acid such as arachidonic acid, is used as one of the constituting fatty acids of triglyceride.

Furthermore, Japanese Patent Application laid open Hei 10 (1998)-70992 and Japanese Patent Application laid open Hei 10 (1998)-191886 disclose edible oil derived from microorganism, which has a lot of arachidonic acid in a form of triglyceride. Its preferred application includes modified milk for a premature baby or an infant, food for infant, and food for a pregnant woman.

However, there is no disclosure of technology about use of the long-chain highly unsaturated fatty acid for the purpose of improving taste such as a body taste of foods and vegetable fat and oil, or no description to suggest a possibility to do that.

There has been a problem that the addition of the long -chain highly unsaturated fatty acid to foods would deteriorate their taste due to odor smell reversion flavor derived from oxidized decomposition of the fatty acid. Many means have been tried to solve the problem.

One of the those means is disclosed in the Japanese Patent Application laid open Sho 63 (1988)-44843 wherein a highly unsaturated fatty acid is included in an inner oil phase of an oil-in-water-in-oil-type emulsion composition. The Japanese Patent Application laid open Hei 6 (1994)-172782 discloses technology of pulverizing fat and oil comprising a highly unsaturated fatty acid. The Japanese Patent Application laid open Hei 9 (1997)-176679 discloses technology of mixing anti-oxidant powder with a pulverized unsaturated fatty acid. The Japanese Patent Application laid open Hei 9 (1997)-263784 discloses technology of mixing δ-tocopherol with fat and oil comprising a polyunsaturated fatty acid. The Japanese Patent Application laid open Hei 11 (1999)-12592 discloses technology of adding soybean source to fish fat and oil comprising a highly unsaturated fatty acid.

The Japanese Patent Application laid open 2001-78702 discloses as an example of application of highly unsaturated fatty acids in the field of food a seasoning having enriched mildness, taste, and after taste, which is prepared by mixing fat and oil with extract into an oil-in-water-type emulsion. Fish oil or fat and oil comprising the fish oil is disclosed as an example of the above fat and oil, including one wherein 10 % by weight or more of the fish oil is made of n-3 (ω-3) highly unsaturated fatty acids.

It is preferred to use a fatty acid ester of polyglycerine as emulsifier and to use extract wherein an antioxidant such as camosine and anserine for preventing oxidization of the fat and oil. No oxidization treatment such as heating treatment is not carried out in a process for the reparation of the seasoning. Examples of foods on which the effect of the seasoning is significantly performed include surimi-based products, fish and processed fish products.

The Japanese Patent No.3220155 discloses a flavoring composition which is prepared by oxidization of fatty acids except milk fat and is characterized by comprising at least one of polyunsaturated fatty acids with n-3 unconjugated double bond in an amount of more than 0.01 % by weight. This flavoring composition comprises sweet and creamy note that is remarkably recognized in butter-like flavor. in order to obtain such note, the fat and oil need to be subjected to oxidization treatment, which has to be carried out under control during a process in the presence of an anti-oxidant that will slightly delay the oxidization. As the flavor generated in the oxidization treatment contains volatile components, the oxidization treatment is preferred to do in a closed system. Actually, the oxidization treatment is done by using a reflux condenser in an example. It is described that the flavoring composition is particularly suitable in use for adding flavor to foods that are advantageously desired to have butter flavor.

In the field of food, there are some kinds of foods that require "body taste" and "rich or thick taste", such as fried foods including pork cutlet, fat and oil containing foods including curry source and "gyo-za" (Chinese-style pork dumpling)." Conventionally, flavor has been added, or animal fat and oil have been used alone or in combination with vegetable fat and oil in order to give the above tastes to those foods.

However, there is a problem that the added flavor is volatilized during a heating treatment so that the given body taste can not be maintained. There is also a concern that cholesterol or saturated fatty acids contained in the animal fat and oil may adversely affect health. On the other hand, since the vegetable fat and oil contain a small amount of cholesterol or saturated fatty acids, foods cocked with the vegetable fat and oil would taste simple or plain, making the foods that need body taste unsatisfactory.

It is therefore desired to provide fat and oil being free of cholesterol and having a low content of saturated fatty acid, while having body taste.

### Summary of the Invention

A long-chain highly unsaturated fatty acid such as arachidonic acid and/or an ester thereof has been considered for a long time a causative agent of putrefactive smell of meat and the like and off-flavor. However, the present inventors have studied to solve the above problems, and finally found that when foods are mixed with the long-chain highly unsaturated fatty acid and/or the ester thereof alone or are subjected to oxidization treatment such as heating with vegetable fat and oil comprising a predetermined amount of said long -chain highly unsaturated fatty acid and/or the ester thereof, the body taste of the foods ill be improved and the original tastes of the foods will be increased. The present invention was completed based on the above findings.

Thus, the present invention is related to a body taste improver comprising an n-6 long-chain highly unsaturated fatty acid and/or an ester thereof, especially one for vegetable fat and oil. The present invention further relates to a body taste improver comprising an n -3 long-chain highly unsaturated fatty acid and/or an ester thereof and being obtainable by oxidization treatment, especially one for vegetable fat and oil.

### Best Mode for Carrying Out the Invention

The "body taste improver" in the present specification means an agent that effects the advantages of the present invention, i.e., an agent that newly provides or improves a significant "body taste" or "rich or thick taste" of the foods when the foods are mixed with the body improver or a vegetable fat and oil composition comprising thereof, or when they are subjected to oxidization treatment such as heating with the vegetable fat and oil composition. The "body taste" will be appreciated by a sensory test described in the examples of the present specification.

The "long-chain highly unsaturated fatty acid" in the present specification means a fatty acid having 20 or more of carbon atoms and 3 or more of double bonds in the case of n-3 long-chain highly unsaturated fatty acids, and a fatty acid having 18 or more of carbon atoms and 3 or more of double bonds in the case of n-6 long-chain highly unsaturated fatty acids. A long-chain highly unsaturated fatty acid having 20∼24 carbon atoms and 4-6 double bonds is preferred in both cases. Examples of the n-6 long-chain highly unsaturated fatty acids include arachidonic acid (AA) and docosatetraenoic acid (DTA), arachidonic acid being preferable. Examples of the n-3 long-chain highly unsaturated fatty acids include docosahexaenoic acid (DHA) and eicosapentaenoic acid (EPA).

There is no limitation on an origin of the long-chain highly unsaturated fatty acid such as arachidonic acid and its ester used in the present invention. Those skilled in the art may optionally use those derived from various animals and vegetables, microorganisms and algae that are commercially available.

For example, Japanese Patent Applications laid open Hei 10 (1998) -70992 and Hei 10 (1998) -191886 disclose edible fat and oil derived from bacteria, which comprises a lot of arachidonic acid in a form of triglyceride. The arachidonic acid may be therefore obtained form said edible fat and oil.

It is also possible to mix and use together two or more kinds of the long-chain highly unsaturated fatty acids, or the long-chain highly unsaturated fatty acids that have different origins but belong to the same kind.

There is no limitation on structure and preparation of the ester of the long -chain highly unsaturated fatty acid, and monohydric and polyhydric alcohols may be used as alcohol that constitutes the above ester. Glycerol is one of the preferred examples of the polyhydric alcohols in view of safety and cost. The glycerol will constitute tri-glyceride, di-glyceride or mono-glyceride. Other fatty acids besides the long-chain highly unsaturated fatty acid may be contained as fatty acids that constitute the ester of the present invention.

There is no limitation on a content of the long-chain highly unsaturated fatty acid and its ester comprised in the body taste improver according to the present invention. However, if the content is too low, a more amount of in the body taste improver shall be needed, which may cause disadvantageous effects due to other components contained therein. The body taste improver of the present invention comprises the long -chain highly unsaturated fatty acid and its ester preferably in an amount of 10 % by weight or more, more preferably 30 % by weight or more. The body taste improver of the present invention may additionally contains other optional components known to those skilled in the art, such as an emulsifier, tocopherols; sterols; phospholipids and other fatty acids; triglycerides, diglycerides and monoglycerides containig the other fatty acids.

There is no limitation on a method for the oxidization treatment of the n-3 long-chain highly unsaturated fatty acid and/or the ester thereof, which, for example, includes heating treatment. There is no limitation on a method for heating treatment, either. It is not necessary to carry out the oxidization treatment in the presence of an antioxidant, or in a closed system. The heating may therefore be normally carried out at 40°C ∼200°C for 0.1∼240 hours, preferably at 80°C ∼180°C for 0.5∼72 hours. Although it is not necessary to subject the n-6 long-chain highly unsaturated fatty acid and/or the ester thereof to the oxidization treatment in order to effect its advantage as the body taste improver, whose advantages shall be further increased by the oxidization treatment. The oxidization treatment may also be done by heating the foods which comprise the body taste improver comprising long-chain highly unsaturated fatty acid and/or the ester thereof.

The present invention further relates to a method for improving body taste of vegetable fat and oil comprising mixing the body taste improver with the vegetable fat and oil, and to a vegetable fat and oil composition comprising the long-chain highly unsaturated fatty acid and/or the ester thereof in an amount of 10 - 10,000 ppm as of the long-chain highly unsaturated fatty acid.

The present vegetable fat and oil composition may be prepared by an appropriate method such as by adding or mixing the long-chain highly unsaturated fatty acid and/or an ester thereof to or with the vegetable fat and oil

Subject vegetable fat and oil includes soybean oil, rape-seed oil, corn oil, sunflower oil, safflower oil, rice oil, olive oil and palm oil. Among them, the advantages of the present invention can be effectively obtained by adding the body taste improver to soybean oil, rape-seed oil, corn oil and palm oil, which are mainly used for heating cooking such as frying and stir-fry.

Furthermore, if the vegetable fat and oil contains an isolated trans-isomer in an amount of 10 - 85 %, especially of 20 - 60 %, the advantages of the present invention will be more increased. A content of the isolated trans-isomer expressed as "%" is obtained according to Standard Methods for the Analysis of Fats, Oils and Related Materials by measuring infrared spectrum of methyl ester of a sample fatty acid and determining a percentage of the amount of methyl ester of elaidic acid against the sample. The vegetable fat and oil containing such isolated trans-isomer may be prepared by any method known to those skilled in the art. For example, it may be prepared by optionally hydrogenating material vegetable fat and oil by any method known to those skilled in the art. The resulting hydrogenated oil may be mixed with non-hydrogenated one.

The phrase "isolated trans-isomer" in the present specification means an unsaturated fatty acid having an isolated double bond in a trans-form (single double bond or non-conjugated double bond),. its content is determiend by Standard Methods for the Analysis of Fats, Oils and Related Materials 2.4.4.2-1996.

In order to effectively obtain the advantages of the present invention, a content of the long-chain highly unsaturated fatty acid in the vegetable fat and oil composition should be preferably 10 - 10,000 ppm, more preferably 10 - 8,000 ppm, much more preferably 10 - 3,000 ppm, most preferably 20 - 1,000 ppm. Thus, it is important that the vegetable fat and oil composition of the present invention should have a particular range of the content of the long-chain highly unsaturated fatty acid and/or the ester thereof. The long-chain highly unsaturated fatty acid is more volatile than its ester, especially glycerine ester, even a less amount of said acid can effect the advantages of the present invention. On the other hand, as esters are relatively less volatile but persistently effective, they are comprised in the composition in a relatively larger amount. Further when the long-chain highly unsaturated fatty acid such as arachidonic acid and/or the ester thereof derived from the microorganism is used, it will be possible to obtain the vegetable fat and oil composition having substantially no fat and oil derived from animal and a low amount of saturated fatty acid and being free of cholesterol.

The vegetable fat and oil composition comprising the n-3 long-chain highly unsaturated fatty acid and/or the ester thereof shall be subjected to the same oxidization treatment as that for the body taste improver so as to show the body taste-improving effect due to the n-3 long-chain highly unsaturated fatty acid and/or the ester thereof

On the other hand, although it is not necessary to subject the vegetable fat and oil composition comprising the n-6 long-chain highly unsaturated fatty acid and/or the ester thereof to the oxidization treatment, the composition may show more effectively its body taste-improving effect by the same treatment.

The vegetable fat and oil composition thus obtained according to the present invention may be applied to various cooking methods such as those of heating preferably at 80°C ∼300°C, and more preferably at 110°C ∼300°C. The heating treatment at such temperature range will improve body taste and increase the original tastes of the foods cooked with the vegetable fat and oil composition.

Finally, the present invention relates to a food comprising the body taste improver or the vegetable fat and oil composition according to the present invention. There is no limitation on the kinds of subject foods, which include foods cooked with oil such as various fried foods and stir-fry; and fat-containing foods such as curry source, Chinese-style pork dumplings and steamed Chinese-style pork dumplings. The foods according to the present invention are provided with a significant body taste and thickness or rich taste by the body taste improver or the vegetable fat and oil composition comprised therein. The body taste of these foods may be further improved with heating treatment.

There is no limitation on an amount of the body taste improver or vegetable fat and oil composition in the foods. Usually, the body taste-improving effects may be obtained with the long-chain highly unsaturated fatty acid and/or the ester thereof in an amount of 0.1∼100,000 ppm, preferably of 0.1∼10,000 ppm at eating time. For example, the body taste-improving effects may be obtained with respect to liquid foods such as soy source and soup with the long-chain highly unsaturated fatty acid and/or the ester thereof in an amount preferably of 1∼1,200 ppm, more preferably of 1∼500 ppm, most preferably of 1∼100 ppm at eating time. For dry foods such as a hamburger, the body taste-improving effects may be obtained with the long-chain highly unsaturated fatty acid and/or the ester thereof in an amount preferably of 20∼2,500 ppm, more preferably of 20∼1,000 ppm, most preferably of 30∼500 ppm at eating time.

### Examples

The present invention will be explained in more detail with reference to the following examples, which should not be construed as limiting a tec hnical scope of the present invention. The term "%" in the following examples mean "% by weight" unless otherwise noted. In the following examples, the content of arachidonic acid (AA) and docosahexaenoic acid (DHA) in AA-containing triglyceride (AATG) and DHA27G, respectively, are expressed as a percentage that was calculated based on the ratio of a peak area of each fatty acid in gas chromatography (GC) analysis in accordance with Standard Methods for the Analysis of Fats, Oils and Related Materials 3. 2. 3-1996.

### Example 1∼4

### Sensory test of potato shoe strings (fried potato)

The vegetable fat and oil composition was prepared in Examples 1∼4 and Comparative Example 1. Potato shoe strings of 150 g ("Shoe string" manufactured by Ajinomoto Frozen Foods Co., Inc.) were fried in 3 kg of each of the above vegetable fat and oil composition at 180 °C for 3 min.

### (Example 1)

Vegetable fat and oil composition comprising AA (purity of 98 % or more, distributed by Wako Chemicals Ltd. and manufactured by ICN) in an amount of 20 ppm in com oil (Ajinomoto Co., Inc.), to be compared with corn oil.

### (Example 2)

Vegetable fat and oil composition comprising AATG (containing AA of 40 % or more and having triglyceride purity of 95 % or more, distributed by Nakarai Tesk Ltd. and manufactured by Suntory Ltd. from microorganism) in an amount of 1,000 ppm as of AA in the same corn oil as in Example 1, to be compared with corn oil.

### (Example 3)

Vegetable fat and oil composition comprising the same AA-containing AATG as in Example 2 in an amount of 1000 ppm as of AA in the same corn oil as in Example 1, to be compared with corn oil.

### (Example 4)

Vegetable fat and oil composition comprising the same AA-containing AATG as in Example 2 in an amount as of 1,000 ppm of AA in rape-seed oil and hydrogenated rape-seed oil, to be compared with hydrogenated rape-seed oil. The hydrogenated rape-seed oil was obtained by hydrogenating rape-oil seed (manufactured Ajinomoto Oil Mills Co. Ltd.). The analytical data for the resulting hydrogenated rape-seed oil were as follows:
IV (Iodine Value): 70 (Standard Methods for the Analysis of Fats, Oils and Related Materials 3. 3. 3-1996)
Content of isolated trans-isomer: 31% (Standard Methods for the Analysis of Fats, Oils and Related Materials 2. 4. 4. 2-1996)

### (Comparative Example 1)

Vegetable fat and oil composition comprising the same AA-containing AATG as in Example 2 in an amount of 10,000 ppm and 20,000 ppm as of AA in the same corn oil as in Example 1, to be compared with corn oil.

### Way of sensory test of potato shoe strings:

In the sensory test, the improvement of body taste refers to the increase of " strength of aroma", "strength of flavour", "strength of taste" and "strength of aftertaste" without any deterioration of "goodness of aroma", "goodness of flavour", "goodness of taste" and "goodness of aftertaste", respectively.

### Item 1∼9

5-score method: -2:much worse (weaker), -1:worse (weaker), 0:same, 1:better (stronger), 2: much better (much stronger)

### Item 10

10-score method: 1:very undesirable, 5:same, 10:very desirable
Panelists: n=15, the number in a column: an average of the scores
Statistical Test: ?:significant difference with risk rate of 30%, *: risk rate of 5%, **: risk rate of 1%

The results obtained in the examples are shown below.

**[TABLE 1]**

| Example 1 | | | |
|---|---|---|---|
| Evaluation Item | Corn oil + AA 20 ppm | Corn oil | Statistical Test |
| 1. Strength of aroma | 0.73 | 0.07 | * |
| 2. Goodness of aroma | 0.20 | 0.27 | |
| 3. Strength of flavour | 0.47 | -0.07 | * |
| 4. Goodness of flavour | 0.47 | 0.13 | ? |
| 5. Strength of taste | 0.53 | -0.07 | * |
| 6. Goodness of taste | 0.60 | 0.07 | * |
| 7. Strength of aftertaste | 0.80 | -0.07 | ** |
| 8. Goodness of aftertaste | 0. 33 | 0.00 | ? |
| 9. Goodness of texture | 0.13 | 0.07 | |
| 10. Overall Evaluation | 5.93 | 5.40 | * |

**[TABLE 2]**

| Example 2 | | | |
|---|---|---|---|
| Evaluation Item | Corn oil + AA 1000 ppm | Corn oil | Statistical Test |
| 1. Strength of aroma | 0. 80 | 0.13 | * |
| 2. Goodness of aroma | 0.27 | 0.33 | |
| 3. Strength of flavour | 0.60 | 0.00 | * |
| 4. Goodness of flavour | 0.60 | 0.13 | * |
| 5. Strength of taste | 0.87 | -0.13 | ** |
| 6. Goodness of taste | 0.67 | 0.13 | * |
| 7. Strength of aftertaste | 0.87 | 0.00 | ** |
| 8. Goodness of aftertaste | 0. 40 | 0.07 | ? |
| 9. Goodness of texture | 0.07 | 0.07 | |
| 10. Overall Evaluation | 6.07 | 5.27 | ** |

**[TABLE 3]**

| Example 3 | | | |
|---|---|---|---|
| Evaluation ltem | Corn oil + AA 5000 ppm | Corn oil | Statistical Test |
| 1. Strength of aroma | 0. 93 | 0.07 | ** |
| 2. Goodness of aroma | 0.40 | 0.33 | |
| 3. Strength of flavour | 0.73 | -0.07 | ** |
| 4. Goodness of flavour | 0.60 | 0.13 | * |
| 5. Strength of taste | 1.00 | -0.20 | ** |
| 6. Goodness of taste | 0.53 | 0.13 | ? |
| 7. Strength of aftertaste | 0.87 | -0.07 | ** |
| 8. Goodness of aftertaste | 0. 47 | 0.07 | ? |
| 9. Goodness of texture | 0.07 | 0.00 | |
| 10. Overall Evaluation | 5.40 | 5.07 | * |

**[TABLE 4]**

| Example 4 | | | | | | | |
|---|---|---|---|---|---|---|---|
| Evaluation Item | 1 | 2 | 3 | 4 | Statistical Test | | |
| | | | | | 1&2 | 1&3 | 1&4 |
| 1.Strength of aroma | 0. 87 | 0.40 | 0.20 | 0.13 | ? | * | * |
| 2.Goodness of aroma | 0.47 | 0.07 | 0.00 | -0.47 | * | * | ** |
| 3.Strength of flavour | 0.60 | 0.20 | 0.07 | -0.13 | ? | * | ** |
| 4.Goodness of flavour | 080 | 0.20 | 0.13 | -0.13 | ** | ** | ** |
| 5. Strength of taste | 0.60 | 0.13 | 0.00 | -0.27 | * | ** | ** |
| 6. Goodness of taste | 0.60 | 0.20 | 0.07 | -0.20 | ? | * | ** |
| 7. Strength of aftertaste | 0.87 | 0.33 | 0.00 | -0.27 | * | ** | ** |
| 8. Goodness of aftertaste | 0. 47 | 0.20 | 0.13 | -0.20 | * | ? | ** |
| 9. Goodness of texture | 0.13 | 0.13 | 0.07 | 0.07 | | | |
| 10. Overall Evaluation | 6.13 | 5.60 | 5.40 | 4.33 | * | ** | ** |
| 1: hydrogenate rape-seed oil + AA 1000 ppm | | | | | | | |
| 2: rape-seed oil + AA 1000 ppm | | | | | | | |
| 3: hydrogenate rape-seed oil | | | | | | | |
| 4: rape-seed oil | | | | | | | |

**[TABLE 5]**

| Example 5 | | | | | |
|---|---|---|---|---|---|
| Evaluation Item | 1. Corn oil + AA 20000 ppm | 2. Corn oil + AA 10000 ppm | 3. Corn oil | Statistical Test | |
| | | | | 1 & 3 | 2 & 3 |
| 1. Strength of aroma | 1.13 | 0.93 | 0.07 | ** | ** |
| 2. Goodness of aroma | -0.33 | -0.13 | 0.40 | * | ? |
| 3. Strength of flavour | 1.20 | 1.13 | 0.33 | ** | ** |
| 4. Goodness of flavour | -0.47 | -0.27 | 0.53 | * | * |
| 5. Strength of taste | 0.93 | 0.67 | 0.13 | ** | * |
| 6. Goodness of taste | -0.67 | -0.47 | 0.67 | ** | ** |
| 7. Strength of aftertaste | 0.93 | 0.73 | 0.00 | ** | * |
| 8. Goodness of aftertaste | -0.67 | -0.53 | 0.33 | * | * |
| 9. Goodness of texture | 0.33 | 0.27 | 0.40 | | |
| 10. Overall Evaluation | 3.40 | 3.87 | 5.13 | ** | ** |

The results of Examples 1∼4 showed that the vegetable fat and oil composition having a particular range of the content of arachidonic acid provided the foods with excellent body taste. On the other hand, the addition of an excess amount of the acid would deteriorate the body taste of the foods.

Further, the following vegetable fat and oil compositions were prepared and used in Examples 5∼11.

### Long-chain highly unsaturated fatty acid used in the Examples:

Arachidonic acid (AA): 98% purity, distributed by Wako Chemicals Ltd. and manufactured by ICN;
AA-containing triglyceride (AATG): AA content of 40-45 %, distributed by Nakarai Tesk Ltd. and manufactured by Suntory Ltd;
Docosatetraenoic acid (n-6) (DTA) 98% purity, manufactured by SIGMA Co.;
γ-Linolenic acid: 99% purity, manufactured by SIGMA Co.;
DHA27G : DHA content 27%, manufactured by NIPPON CHEMICAL FEED CO., LTD.;
EPA: 99%. purity, manufactured by SIGMA Co.;
DHA: 98%, purity, manufactured by SIGMA Co.;
Linoieic acid: 98%, purity, manufactured by SIGMA Co.;
α-Linofenic acid: 99% purity, manufactured by SIGMA Co.;
Pure light oil (PL oil): low linolenic acid-containing rape seed oil, manufactured by Ajinomoto Co., Inc.

### Sensory test:

In the sensor test, the improvement of body taste refers to the increase of "strength of aroma", "strength of flavour" and "strength of taste" without any deterioration of "goodness of aroma", "goodness of flavour" and "goodness of taste", respectively. Panelists: n=7

The symbols used in the following Tables showing the test results means as follows:
"X": weaker or worse than control;
"Δ": the same degree as control;
"O": stronger or better than control;
"ⓞ": much stronger or much better than control.

### (Example 5)

Effect of improving body taste of foods by heating both highly unsaturated fatty acid and foods

Each fatty acid was diluted with PL oil to a concentration of 1% (W/W) to prepare preparation oil ①. Preparation oil ① of 0.1g was added to 100 g of strong soy sauce (7%) (manufactured by Kikkoman Co., trade name "Honn-Jozo Syoyu") and heated at 90 °C for 30 min. The results were shown in TABLE 6, which demonstrates that the improvement of body taste was obtained by heating.

**[TABLE 6]**

| Preparation oil | PL Oil (cont.) | AA | DTA | γ-Linolenic acid | EPA | DHA | Linolic Acid | α-Linolenic acid |
|---|---|---|---|---|---|---|---|---|
| Amount of addition (g) | 0.1 | 0.1 | 0.1 | 0.1 | 0.1 | 0.1 | 0.1 | 0.1 |
| Conc. (ppm) of highly unsaturated fatty acid at eating | 0 | 10 | 10 | 10 | 10 | 10 | 10 | 10 |
| Strength of aroma | Δ | ⓞ | ⓞ | ○ | ⓞ | ⓞ | Δ | Δ |
| Goodness of aroma | Δ | ⓞ | ⓞ | ○ | ○ | ○ | Δ | Δ |
| Strength of taste | Δ | ⓞ | ⓞ | ○ | ⓞ | ⓞ | Δ | Δ |
| Goodness of taste | Δ | ⓞ | ⓞ | ○ | ⓞ | ⓞ | Δ | Δ |
| Overall Evaluation | Δ | ⓞ | ⓞ | ○ | ⓞ | ⓞ | Δ | Δ |

### (Example 6)

Effect of improving body taste by the highly unsaturated fatty acid subjected to the oxidization treatment

Each fatty acid was diluted with PL oil to a concentration of 1% (W/W) to prepare preparation oil ①. Preparation oil ① of 30g was heated at 120°C for 3 hours. Then, 0.1 g of the heated preparation oil ① was added to 100 g of strong soy sauce (7%) (manufactured by Kikkoman Co., trade name "Honn-Jozo Syoyu"). The results were shown in TABLE 7, which demonstrates that the improvement of body taste was obtained by adding the highly unsaturated fatty acid subjected to the oxidization treatment.

**[TABLE 7]**

| Preparation oil | PL Oil (cont.) | AA | DTA | γ-Linolenic acid | EPA | DHA |
|---|---|---|---|---|---|---|
| Amount of addition (g) | 0.1 | 0.1 | 0.1 | 0.1 | 0.1 | 0.1 |
| Conc. (ppm) of highly unsaturated fatty acid at eating | 0 | 10 | 10 | 10 | 10 | 10 |
| Strength of flavour | Δ | ⓞ | ⓞ | ⓞ | ⓞ | ⓞ |
| Goodness of flavour | Δ | ⓞ | ⓞ | ⓞ | ○ | ○ |
| Strength of taste | Δ | ⓞ | ⓞ | ⓞ | ⓞ | ⓞ |
| Goodness of taste | Δ | ⓞ | ⓞ | ⓞ | ⓞ | ⓞ |
| Overall Evaluation | Δ | ⓞ | ⓞ | ⓞ | ⓞ | ⓞ |

### (Example 7)

Effect of improving body taste by the highly unsaturated fatty acid subjected to the oxidization treatment

Each fatty acid was diluted with PL oil to a concentration of 1% (W/W) to prepare preparation oil ①. Preparation oil ① of 30g was heated at 120°C for 3 hours to give Preparation oil ②. Two pieces (10.6 g) of chicken clear soup (consomme soups: manufactured by Ajinomoto Co., Inc.,) were mixed with 600 g of water, and heated at 90°C for 30 min. to give soup solution. Preparation oil ② or preparation oil ① (0.03 g) was added to the soup solution (100 g) to give AA①, DHA①, AA② and DHA②. The results are shown in TABLE 8, which demonstrates that the improvement of body taste was obtained by adding the highly unsaturated fatty acid subjected to the oxidization treatment.

**[TABLE 8]**

| Preparation oil | PL oil (cont.) | AA① | AA② | DHA① | DHA② |
|---|---|---|---|---|---|
| Conc. (ppm) of highly unsaturated fatty acid at eating | 0 | 3 | 3 | 3 | 3 |
| Strength of aroma | Δ | Δ | ⓞ | Δ | ⓞ |
| Goodness of aroma | Δ | Δ | ⓞ | Δ | ○ |
| Strength of taste | Δ | Δ | ⓞ | Δ | ⓞ |
| Goodness of taste | Δ | Δ | ⓞ | Δ | ⓞ |
| Overall Evaluation | Δ | Δ | ⓞ | Δ | ⓞ |

### (Example 8)

Amount of the highly unsaturated fatty acid to be added in order to improve body taste of foods by heating both the highly unsaturated fatty acid and foods

The following preparation oils were used:
① 0.05 % of the highly unsaturated fatty acid/ PL oil; ② 0.1 % of the highly unsaturated fatty acid/ PL oil; 1 % of the highly unsaturated fatty acid/ PL oil; ④ 10 % of the highly unsaturated fatty acid/ PL oil; ⑤ 50 % of the highly unsaturated fatty acid/ PL oil.

Each preparation oil of 0.1g was added to 100 g of strong soy sauce (7%) (manufactured by Kikkoman Co., trade name "Honn-Jozo Syoyu") and heated at 90 °C for 30 min. The results were shown in TABLE 9, which demonstrates that the body taste of the soy sauce was improved by the addition of the highly unsaturated fatty acid in an amount of 0.5 - 100 ppm, followed by heating, while over-addition of the same acid would cause unpleasant flavour.

**[TABLE 9]**

| Preparation oil | PL Oil (cont.) | AA ① | AA ② | AA ③ | AA ④ | AA ⑤ | EPA ① | EPA ② | EPA ③ | EPA ④ | EPA ⑤ |
|---|---|---|---|---|---|---|---|---|---|---|---|
| Conc. (ppm) of highly unsaturate d fatty acid at eating | 0 | 0.5 | 1 | 10 | 100 | 500 | 0.5 | 1 | 10 | 100 | 500 |
| Strength of aroma | Δ | ○ | ○ | ⓞ | ⓞ | ⓞ | ○ | ○ | ⓞ | ⓞ | ⓞ |
| Goodness of aroma | Δ | ○ | ○ | ⓞ | ⓞ | | ○ | ○ | ○ | ○ | X |
| Strength of taste | Δ | ○ | ○ | ⓞ | ⓞ | ⓞ | ○ | ○ | ⓞ | ⓞ | ⓞ |
| Goodness of taste | Δ | ○ | ○ | ⓞ | ⓞ | X | ○ | ○ | ○ | ○ | X |
| Overall Evaluation | Δ | ○ | ○ | ⓞ | ⓞ | X | ○ | ○ | ⓞ | ⓞ | X |

### (Example 9)

Examples of foods to which the highly unsaturated fatty acid is added and heated

Soup for Chinese noodle was prepared by using the following preparation oil.
① 1% highly unsaturated fatty acid/PL oil
② 10% AATG/PL oil (AA content:4%)
③ 10% DHA27G/PL oil (DHA content: 2.7%)
④ AATG (AA content: 40%)
⑤ DHA27G (DHA content: 27%)

"MSG" in the following TABLE means a trade name of monosodium L-glutamic acid (100%) manufactured by Ajinooto Co. Inc., and "IN" means a trade name of sodium 5'-inosinic acid (100%) manufactured by Ajinooto Co. Inc.

**[TABLE 10]**

| Stock solution | | |
|---|---|---|
| Material | Formulation | Formulation Ratio (%) |
| strong soy sauce (Kikkoman Co.) | 45 | 50.9 |
| Sugar | 5 | 5.7 |
| MSG | 3.3 | 3.7 |
| IN | 0.3 | 0.3 |
| Garlic Powder | 0.1 | 0.1 |
| Onion Powder | 0.5 | 0.6 |
| White Pepper | 0.15 | 0.2 |
| Water | 34 | 38.5 |
| Total | 88.35 | 100 |

Preparation oil ①∼③ and the highly unsaturated fatty acid ④ and ⑤ were added to the above stock solution, and heated at 90 °C for 30 min. After cooling down, they were diluted in hot water to a final concentration of 15% and evaluated in it. The results were shown in TABLE 10 and TABLE 11, which demonstrate that the soup for Chinese noodle with a good body taste was obtained by the addition of the highly unsaturated fatty acid in an amount of 3 ~ 1,200 ppm, preferably 10 ∼ 1,200 ppm, followed by heating, while over-addition of the same acid would cause unpleasant flavour.

**[TABLE 11]**

| Preparation oil | PL Oil (cont.) | AA② | AA① | AA① | DHA③ | DHA① | DHA① |
|---|---|---|---|---|---|---|---|
| Amount of Addition (g) | 0.2 | 0.2 | 0.2 | 2 | 0.2 | 0.2 | 2 |
| Conc. (ppm) of highly unsaturated fatty acid at eating | 0 | 12 | 3 | 30 | 8 | 3 | 30 |
| Strength of aroma | Δ | ⓞ | ⓞ | ⓞ | ⓞ | ⓞ | ⓞ |
| Goodness of aroma | Δ | ⓞ | ⓞ | ⓞ | ○ | ○ | ○ |
| Strength of taste | Δ | ⓞ | ⓞ | ⓞ | ⓞ | ⓞ | ⓞ |
| Goodness of taste | Δ | ⓞ | ⓞ | ⓞ | ⓞ | ⓞ | ⓞ |
| Overall Evaluation | Δ | ⓞ | ⓞ | ⓞ | ⓞ | ⓞ | ⓞ |

**[TABLE 12]**

| Preparation oil | AA④ | AA④ | AA④ | AA④ | DHA ⑤ | DHA ⑤ | DHA ⑤ | DHA ⑤ |
|---|---|---|---|---|---|---|---|---|
| Amount of Addition (g) | 0.2 | 1 | 2 | 2 | 0.2 | 1 | 2 | 4 |
| Conc. (ppm) of highly unsaturated fatty acid at eating | 120 | 600 | 1200 | 2400 | 80 | 400 | 800 | 1600 |
| Strength of aroma | ⓞ | ⓞ | ⓞ | ⓞ | ⓞ | ⓞ | ⓞ | ⓞ |
| Goodness of aroma | ⓞ | ⓞ | ⓞ | X | ⓞ | ⓞ | ⓞ | X |
| Strength of taste | ⓞ | ⓞ | ⓞ | ⓞ | ⓞ | ⓞ | ⓞ | ⓞ |
| Goodness of taste | ⓞ | ⓞ | ⓞ | X | ⓞ | ⓞ | ⓞ | X |
| Overall Evaluation | ⓞ | ⓞ | ⓞ | X | ⓞ | ⓞ | ⓞ | X |

### (Example 10)

Examples of foods to which the highly unsaturated fatty acid is added and heated

Hamburger was prepared by using the following preparation oil.
① AATG (AA content: 40%)
② 10% AATG/PL oil (AA content: 4%)
③ 10 % DHA27G/PL oil (DHA content: 2.7%)

**[TABLE 13]**

| | Formulation ratio |
|---|---|
| Minced low-fat pork | 39 |
| Lard | 5 |
| Starch | 1 |
| Bread crumb | 7 |
| Onion | 16 |
| Salt | 0 |
| Sugar | 1 |
| Soy sauce | 1 |
| White pepper | 0 |
| Egg white | 5 |
| Granulated soybean protein | 4 |
| Water | 21 |
| Total | 100 |

The formulation of the TABLE 13 was mixed with a hobart mixer, divided into a piece of 160 g each, mixed with each preparation oil, shaped and baked.. Baking conditions: temperature of a hot plate 200°C, 5 min. for each face x 2 (10 min. in total)

The results were shown in TABLE 14, which demonstrates that the hamburger with a good body taste was obtained by the addition of the highly unsaturated fatty acid in an amount of 50 ~ 2,500 ppm, followed by heating while over-addition of the same acid would cause unpleasant flavour.

**[TABLE 14]**

| Preparation oil | PL oil (cont.) | ② | ① | ③ | ① | ① | ① |
|---|---|---|---|---|---|---|---|
| Amount of Addition (g) | 0.2 | 0.2 | 0.2 | 0.3 | 0.5 | 1 | 2 |
| Conc. (ppm) of highly unsaturated fatty acid at eating | 0 | 50 | 500 | 34 | 1250 | 2500 | 5000 |
| Strength of aroma | Δ | ○ | ⓞ | ○ | ⓞ | ⓞ | ⓞ |
| Goodness of aroma | Δ | ○ | ⓞ | ○ | ○ | ○ | X |
| Strength of taste | Δ | ○ | ⓞ | ○ | ⓞ | ⓞ | ⓞ |
| Goodness of taste | Δ | ○ | ⓞ | ○ | ○ | ○ | X |
| Overall Evaluation | Δ | ○ | ⓞ | ○ | ○ | ○ | X |

### (Example 11)

### Fat and oil formulation

Potato shoe strings were fried under the same conditions as in Examples 1∼4 in DTA-added vegetable fat and oil composition, and evaluated in the same sensory test (Panelists: n=12). The results are shown in TABLE 15.

**[TABLE 15]**

| Evaluation Item | Corn oil + DTA 100 PPm | Corn oil | Statistical Test |
|---|---|---|---|
| 1. Strength of aroma | 0.75 | 0 | ** |
| 2. Goodness of aroma | 0.17 | 0.33 | |
| 3. Strength of flavour | 0.33 | 0 | ? |
| 4. Goodness of flavour | 0.42 | 0.08 | ? |
| 5. Strength of taste | 0.42 | 0 | ? |
| 6. Goodness of taste | 0.67 | 0.08 | * |
| 7. Strength of aftertaste | 0.83 | 0 | ** |
| 8. Goodness of aftertaste | 0. 42 | 0.08 | ? |
| 9. Goodness of texture | 0.08 | 0.08 | |
| 10. Overall Evaluation | 5.92 | 5.33 | * |
| Statistical Test: ?:significant difference with risk rate of 30%, *: risk rate of 5%, **:risk rate of 1% | | | |

### Advantages of the invention

It is confirmed that the body taste of foods can be improved and the original tastes of foods can be increased when they are mixed with the vegetable fat and oil composition comprising a predetermined amount of the long -chain highly unsaturated fatty acid and/or the ester thereof, or heated and cooked with the same vegetable fat and oil composition.

## Claims

1. A body taste improver comprising an n-6 long-chain highly unsaturated fatty acid and/or an ester thereof.

2. A body taste improver according to Claim 1, wherein the long -chain highly unsaturated fatty acid is arachidonic acid.

3. A body taste improver according to Claim 1 or 2, wherein the long-chain highly unsaturated fatty acid is derived from microorganism.

4. A body taste improver comprising an n -3 long-chain highly unsaturated fatty acid and/or an ester thereof and being obtainable by oxidization treatment.

5. A body taste improver according to anyone of Claim 1 - 4, comprising the long-chain highly unsaturated fatty acid and/or an ester thereof in an amount of 10 % by weight or more.

6. A method for improving body taste of vegetable fat and oil comprising mixing the body taste improver according to anyone of Claim 1 - 5 with the vegetable fat and oil.

7. A method for improving body taste of vegetable fat and oil comprising mixing the body taste improver according to anyone of Claim 1 - 5 with the vegetable fat and oil, followed by oxidization treatment.

8. A method according to Claim 6 or 7, comprising mixing the body taste improver with the vegetable fat and oil so that a content of the long-chain highly unsaturated fatty acid should be 10 - 10,000 ppm.

9. A method according to any one of Claim 6 to 8, wherein the vegetable fat and oil contains an isolated trans-isomer in an amount of 10 - 85 %.

10. A vegetable fat and oil composition comprising an n-6 long-chain highly unsaturated fatty acid and/or the ester thereof in an amount of 10 -10,000 ppm as of the long-chain highly unsaturated fatty acid.

11. A vegetable fat and oil composition according to Claim 10, wherein the long-chain highly unsaturated fatty acid is arachidonic acid.

12. A vegetable fat and oil composition according to Claim 11 or 12, wherein the long-chain highly unsaturated fatty acid is derived from microorganism.

13. A vegetable fat and oil composition comprising an n-3 long-chain highly unsaturated fatty acid and/or the ester thereof in an amount of 10 - 10,000 ppm as of the long -chain highly unsaturated fatty acid, and being obtainable by oxidization treatment.

14. A vegetable fat and oil composition according to any one of Claim 10 or 13, containing an isolated trans-isomer in an amount of 10 - 85 %.

15. A vegetable fat and oil composition according to any one of Claim 10 or 14, comprising substantially no fat and oil derived from animal.

16. A food comprising the body taste improver according to anyone of Claim 1 - 5, or the vegetable fat and oil composition according to any one of Claim 10 or 15.
